# EUROPEAN PATENT SPECIFICATION

(11) **EP 4 530 138 B1**
(45) Date of publication and mention of the grant of the patent: **25.02.2026**
(21) Application number: 24201884.4
(22) Date of filing: 23.09.2024
(51) Int. Cl.: B60T 8/17, B60T 7/20, B60T 13/26, B60T 13/68

(54) **TRAILER CONTROL VALVE AND TRAILER BRAKING SYSTEM**
ANHÄNGERSTEUERVENTIL UND ANHÄNGERBREMSANLAGE
SOUPAPE DE COMMANDE DE REMORQUE ET SYSTÈME DE FREINAGE DE REMORQUE

(30) Priority: 26.09.2023 CN 202311246795
(43) Date of publication of application: 02.04.2025
(73) Proprietor: ZF Commercial Vehicle Systems (Qingdao) Co., Ltd., Qingdao 266510 (CN)
(72) Inventor: Jiang, John, Zaozhuang 277500 (CN); Li, Jesse, Jinan 250101 (CN)
(74) Representative: Lüdtke, Thomas

(56) References cited:
- CN-A- 111 907 502
- DE-A1- 102020 204 924
- US-B2- 7 114 787

## Description

### Technical Field

The present invention relates to the technical field of trailer braking, and in particular to a trailer control valve and a trailer braking system.

### Background Art

A heavy-duty commercial vehicle is an important logistics transportation tool, and a carrier by which transportation is implemented is a tractor (head) plus a trailer. Currently, most tractors have a traction control function.

However, since a braking control pipeline of the tractor and a braking control pipeline of the trailer are two sets of systems, a braking demand of the trailer is implemented by a trailer control valve mounted on the tractor. An ordinary trailer control valve can only passively transmit a braking demand from a driver but has no traction control function. Traction control can solve the problems from the vehicle such as rollover and start rolling, especially in logistics transportation, where the trailer is often the maximum-loaded in the whole system. Therefore, the traction control over the trailer is significant.

Exemplary braking systems are disclosed in CN 111 907 502 A, DE 10 2020 204924 A1 and US 7 114 787 B2.

### Summary of the Invention

In view of this, the present invention provides a trailer control valve having a traction control function and a trailer braking system, in which an ordinary trailer control valve is integrated with a traction control valve, such that a braking force of a trailer can be actively controlled according to the state of a vehicle, realizing active control of traction of the trailer and improving the safety of the whole vehicle.

In an aspect of the present invention, a trailer control valve is provided, including a control port, a relay valve, an air inlet and a first air outlet, the control port being connected to a control chamber of the relay valve, and the air inlet and the first air outlet being respectively connected to a brake chamber of the relay valve. The trailer control valve further includes: a traction control valve arranged in a pipeline from the control port to the control chamber and connected to the air inlet. The traction control valve has a first operating state in which the control port is in communication with the control chamber through a first channel of the traction control valve; and the traction control valve has a second operating state in which the air inlet is in communication with the control chamber through a second channel of the traction control valve.

In some embodiments, the traction control valve includes: a first valve member arranged in the pipeline from the control port to the control chamber, the first valve member having a first valve chamber and a second valve chamber which are alternatively opened, and the first valve chamber forming the first channel; and a second valve member connected to the air inlet and the second valve chamber, the second valve member having an air intake valve chamber, and the air intake valve chamber and the second valve chamber forming the second channel.

In some embodiments, the first valve member is a two-way check valve, the two-way check valve having a first inlet connected to the control port, a second inlet connected to the air intake valve chamber and an outlet connected to the control chamber; and a movable valve core is arranged inside a valve chamber of the two-way check valve, and as the valve core moves, the first inlet is in communication with the outlet to open the first valve chamber, or the second inlet is in communication with the outlet to open the second valve chamber.

In some embodiments, the second valve member is a two-position three-way solenoid valve having the air intake valve chamber and an exhaust valve chamber, the air intake valve chamber being connected to the air inlet and the second valve chamber, and the exhaust valve chamber being connected to the second valve chamber.

In some embodiments, an operating state switching control end of the traction control valve is connected to an electronic control unit.

In some embodiments, the traction control valve is integrated into a housing of the trailer control valve.

In some embodiments, the control port includes at least one of a first control port and a second control port connected to a foot brake valve.

In some embodiments, the trailer control valve further includes a second air outlet connected to the air inlet.

In some embodiments, the trailer control valve further includes a pneumatic valve arranged in a pipeline from the air inlet to the first air outlet and the second air outlet, a control end of the pneumatic valve being connected to the control chamber.

In another aspect of the present invention, a trailer braking system is provided, and the trailer braking system is equipped with a trailer control valve as described in any one of the above embodiments.

Compared with the prior art, the present invention has at least the following beneficial effects.

In the trailer control valve, when the control port outputs a control air pressure to the control chamber of the relay valve, the brake chamber of the relay valve can be opened, such that a brake air pressure of the air inlet is delivered to a trailer control pipeline through the first air outlet, achieving braking control over the trailer; and the brake air pressure of the first air outlet disappears as the control air pressure of the control port disappears.

According to the present invention, the ordinary trailer control valve is integrated with the traction control valve. When the traction control valve is in the first operating state, the control port is in communication with the control chamber through the first channel of the traction control valve, the control port is connected to the foot brake valve, and at this time, braking control over the trailer is realized according to a braking demand from a driver. When the traction control valve is in the second operating state, the air inlet is in communication with the control chamber through the second channel of the traction control valve. The value of the air pressure output by the first air outlet varies with the value of the air pressure from the control chamber. The air inlet is connected to an air reservoir of a tractor, and the value of an air pressure output by the air reservoir is automatically adjusted according to the state of the vehicle. At this time, the braking force of the trailer can be actively controlled according to the state of the vehicle.

Therefore, the trailer control valve according to the present invention can not only perform braking control over the trailer according to the braking demand from the driver, but also realize active control of traction of the trailer according to the state of the vehicle, thus improving the safety of the whole vehicle.

### Brief Description of the Drawings

The accompanying drawings herein, which are incorporated into and constitute a part of the description, illustrate embodiments consistent with the present invention and, together with the description, are used to explain principles of the present invention.
FIG. 1 is a schematic principle diagram of a trailer control valve according to an embodiment of the present invention;
FIG. 2 is a schematic principle diagram of the trailer control valve according to an embodiment of the present invention, showing an air path direction of a traction control valve in a first operating state;
FIG. 3 is a schematic principle diagram of the trailer control valve according to an embodiment of the present invention, showing an air path direction of the traction control valve in a second operating state;
FIG. 4 is a schematic structural diagram of the trailer control valve according to an embodiment of the present invention;
FIG. 5 is a schematic structural diagram of a first valve member according to an embodiment of the present invention, showing an air path direction when a first valve chamber is opened;
FIG. 6 is a schematic structural diagram of the first valve member according to an embodiment of the present invention, showing an air path direction when a second valve chamber is opened; and
FIG. 7 is a schematic structural diagram of a second valve member according to an embodiment of the present invention, showing an air path direction when an air intake valve chamber is opened.

### Detailed Description of Embodiments

Now exemplary implementations will be described more fully with reference to the accompanying drawings.

The accompanying drawings are only schematic illustrations of the present invention, and are not necessarily drawn to scale. In the accompanying drawings, the same reference numerals denote the same or similar parts, and thus the repeated description thereof will be omitted. Some block diagrams shown in the accompanying drawings are functional entities, which do not necessarily correspond to physically or logically independent entities. These functional entities may be implemented in the form of software, in one or more hardware modules or integrated circuits, or in different networks and/or processor apparatuses and/or microcontroller apparatuses.

The terms "first", "second" and similar terms used in the specific description do not denote any order, quantity, or importance, but are merely used to distinguish different components.

It should be noted that the embodiments in the present invention and features of the various embodiments can be combined with each other without conflict.

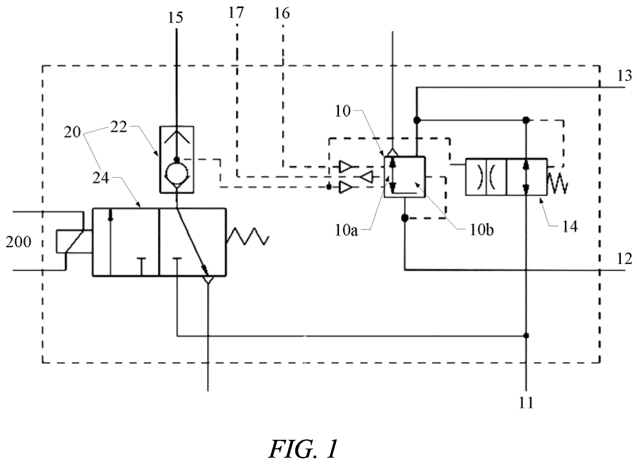

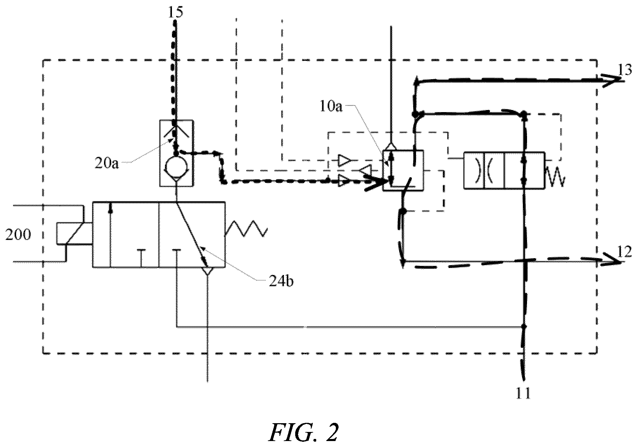

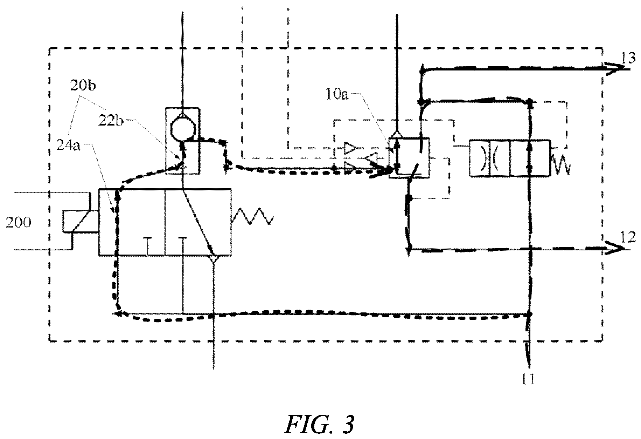

FIGS. 1 to 3 illustrate a principle of a trailer control valve according to an embodiment of the present invention. An air path direction of a traction control valve in a first operating state is marked out in FIG. 2, and an air path direction of the traction control valve in a second operating state is marked out in FIG. 3. With reference to FIGS. 1 to 3, the trailer control valve according to an embodiment of the present invention includes:
a control port 15, a relay valve 10, an air inlet 11 and a first air outlet 12, the control port 15 being connected to a control chamber 10a of the relay valve 10, and the air inlet 11 and the first air outlet 12 being respectively connected to a brake chamber 10b of the relay valve 10; and
a traction control valve 20 arranged in a pipeline from the control port 15 to the control chamber 10a and connected to the air inlet 11.

The traction control valve 20 has a first operating state in which the control port 15 is in communication with the control chamber 10a through a first channel 20a of the traction control valve 20; and
the traction control valve 20 has a second operating state in which the air inlet 11 is in communication with the control chamber 10a through a second channel 20b of the traction control valve 20.

In the trailer control valve, the brake chamber 10b of the relay valve 10 can be opened when the control port 15 outputs a control air pressure to the control chamber 10a of the relay valve 10, such that a brake air pressure of the air inlet 11 is delivered to a trailer control pipeline through the first air outlet 12, achieving braking control over a trailer; and the brake air pressure of the first air outlet 12 disappears as the control air pressure of the control port 15 disappears.

According to the present invention, an ordinary trailer control valve is integrated with the traction control valve 20. When the traction control valve 20 is in the first operating state, the control port 15 is in communication with the control chamber 10a through the first channel 20a of the traction control valve 20, and the control port 15 is connected to a foot brake valve, and at this time, braking control over the trailer is realized according to a braking demand from a driver. When the traction control valve 20 is in the second operating state, the air inlet 11 is in communication with the control chamber 10a through the second channel 20b of the traction control valve 20. The value of the air pressure output by the first air outlet 12 varies with the value of the air pressure from the control chamber 10a. The air inlet 11 is connected to an air reservoir of a tractor, and the value of air pressure output by the air reservoir is automatically adjusted according to the state of a vehicle. At this time, a braking force of the trailer can be actively controlled according to the state of the vehicle.

Therefore, the trailer control valve according to the present invention can not only perform braking control over the trailer according to the braking demand from the driver, but also realize active control of traction of the trailer according to the state of the vehicle, thus improving the safety of the whole vehicle.

In some embodiments, the traction control valve 20 includes:
a first valve member 22 arranged in the pipeline from the control port 15 to the control chamber 10a, the first valve member 22 having a first valve chamber and a second valve chamber 22b which are alternatively opened, and the first valve chamber being the first channel 20a; and
a second valve member 24 connected to the air inlet 11 and the second valve chamber 22b, the second valve member 24 having an air intake valve chamber 24a, and the air intake valve chamber 24a and the second valve chamber 22b forming the second channel 20b.

By means of the first valve chamber and the second valve chamber 22b of the first valve member 22 that are alternatively opened, the control port 15 and the air inlet 11 are alternatively connected to the control chamber 10a of the relay valve 10, such that the traction control valve 20 enters the first operating state or the second operating state. By means of the second valve member 24, the air intake valve chamber 24a thereof is opened when traction control over the trailer is required, such that the air inlet 11 is in communication with the control chamber 10a of the relay valve 10 through the second channel 20b; and the second channel 20b is closed in case of no need for active control of traction of the trailer.

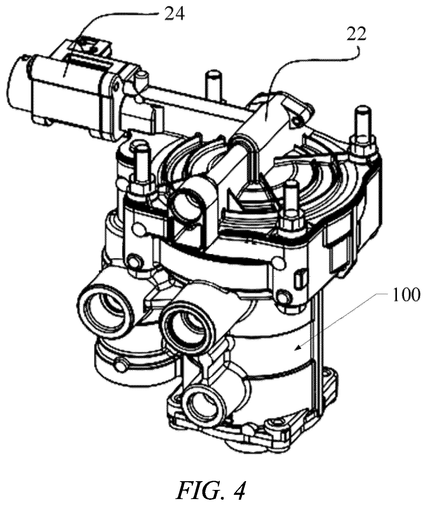

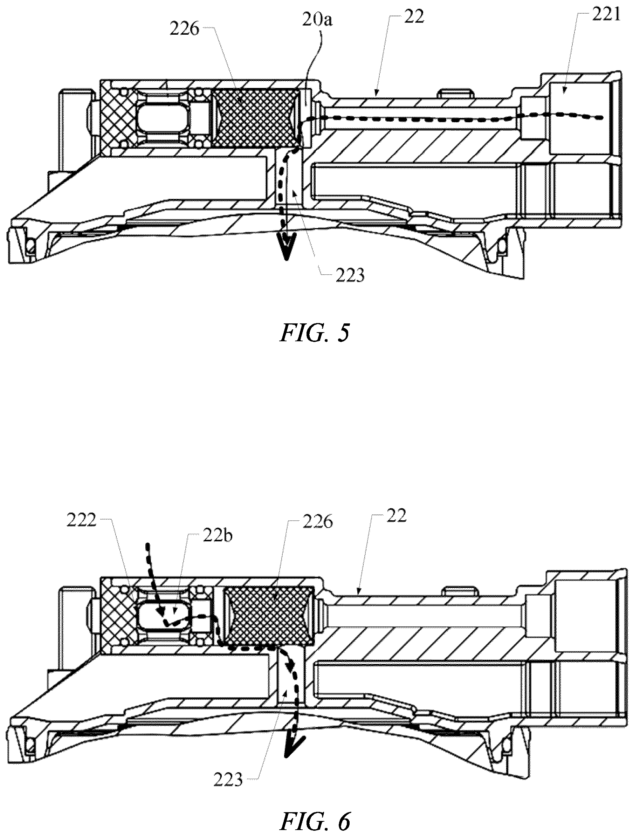

FIG. 4 shows a structure of the trailer control valve according to an embodiment of the present invention. FIGS. 5 and 6 show a structure of the first valve member. An air path direction when the first valve chamber is opened is marked out in FIG. 5, and an air path direction when the second valve chamber is opened is marked out in FIG. 6. With reference to FIGS. 1 to 6, in some embodiments:
the first valve member 22 is a two-way check valve, the two-way check valve having a first inlet 221 connected to the control port 15, a second inlet 222 connected to the air intake valve chamber 24a and an outlet 223 connected to the control chamber 10a; and
a movable valve core 226 is arranged inside a valve chamber of the two-way check valve, and as the valve core 226 moves, the first inlet 221 is in communication with the outlet 223 to open the first valve chamber (i.e., the first channel 20a), or the second inlet 222 is in communication with the outlet 223 to open the second valve chamber 22b.

The valve core 226 of the two-way check valve can move, under the action of an air pressure from the first inlet 221, to open the first valve chamber (i.e., the first channel 20a), or move, under the action of an air pressure from the second inlet 222, to open the second valve chamber 22b, so as to alternatively open the first channel 20a and the second channel 20b conveniently and accurately.

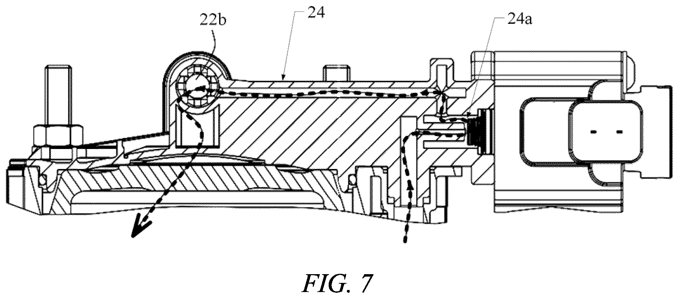

FIG. 7 shows a structure of the second valve member, in which an air path direction when the air intake valve chamber is opened is marked out. With reference to FIGS. 1 to 7, in some embodiments:
the second valve member 24 is a two-position three-way solenoid valve having the air intake valve chamber 24a and an exhaust valve chamber 24b, the air intake valve chamber 24a being connected to the air inlet 11 and the second valve chamber 22b, and the exhaust valve chamber 24b being connected to the second valve chamber 22b.

The air intake valve chamber 24a of the two-position three-way solenoid valve is opened when traction control over the trailer is required, such that the second channel 20b is opened, and the brake air pressure of the air inlet 11 enters the control chamber 10a of the relay valve 10; and the second channel 20b is closed when there is no need to actively control the traction of the trailer, such that the air pressure therein is discharged through the exhaust valve chamber 24b.

The traction control valve 20 is formed by the two-way check valve and the two-position three-way solenoid valve, such that convenient and accurate control over the traction of the trailer is realized. In other embodiments, the traction control valve 20 may also be switched between the first operating state and the second operating state in the form of a plurality of solenoid valves connected in series or a plurality of check valves combined.

In some embodiments, an operating state switching control end 200 of the traction control valve 20 is connected to an electronic control unit ECU. In this way, the traction control valve 20 can receive an ECU signal of the whole vehicle and open the second channel 20b, realizing active braking control over the trailer without involvement of the driver, which in turn realizes the function of traction control over the trailer.

In some embodiments, the traction control valve 20 is integrated into a housing 100 of the trailer control valve. In this way, the trailer control valve is highly integrated and is compact in structure.

In some embodiments, the control port 15 includes at least one of a first control port and a second control port connected to the foot brake valve. FIGS. 1 to 3 show that the control port 15 is a first control port, which is not limited thereto. In other embodiments, the traction control valve 20 may also be arranged at a second control port 16, or at both of the first control port and the second control port 16.

In addition, the trailer control valve further includes a third control port 17 for connecting a hand brake valve to the control chamber 10a of the relay valve 10.

In some embodiments, the trailer control valve further includes a second air outlet 13 connected to the air inlet 11. The first air outlet 12 may be connected to a trailer service braking control pipeline, and the second air outlet 13 may be connected to a trailer emergency braking/parking braking control pipeline.

In some embodiments, the trailer control valve further includes a pneumatic valve 14 arranged in a pipeline from the air inlet 11 to the first air outlet 12 and the second air outlet 13, a control end of the pneumatic valve 14 being connected to the control chamber 10a.

When the control air pressure is led to the control chamber 10a, the pneumatic valve 14 is opened, and the brake air pressure of the air inlet 11 may be led to the first air outlet 12 and the second air outlet 13, thus realizing trailer braking.

An embodiment of the present invention also provides a trailer braking system equipped with a trailer control valve as described in any one of the above embodiments. The trailer braking system is equipped with the trailer control valve mentioned above, which can receive the ECU signal of the whole vehicle while receiving a braking signal from the driver, so as to realize active braking control over the trailer, which in turn achieves the function of traction control over the trailer.

## Claims

1. A trailer control valve, which comprises a control port (15), a relay valve (10), an air inlet (11) and a first air outlet (12), the control port (15) being connected to a control chamber (10a) of the relay valve (10), and the air inlet (11) and the first air outlet (12) being respectively connected to a brake chamber (10b) of the relay valve (10);
wherein
a traction control valve (20) arranged in a pipeline from the control port (15) to the control chamber (10a) and connected to the air inlet (11); **characterised in that**
the traction control valve (20) has a first operating state in which the control port (15) is in communication with the control chamber (10a) through a first channel (20a) of the traction control valve (20); and
the traction control valve (20) has a second operating state in which the air inlet (11) is in communication with the control chamber (10a) through a second channel (20b) of the traction control valve (20).

2. The trailer control valve according to claim 1, **characterized in that** the traction control valve (20) comprises:
a first valve member (22) arranged in the pipeline from the control port (15) to the control chamber (10a), the first valve member (22) having a first valve chamber and a second valve chamber (22b) which are alternatively opened, and the first valve chamber forming the first channel (20a); and
a second valve member (24) connected to the air inlet (11) and the second valve chamber (22b), the second valve member (24) having an air intake valve chamber (24a), and the air intake valve chamber (24a) and the second valve chamber (22b) forming the second channel (20b).

3. The trailer control valve according to claim 2, **characterized in that** the first valve member (22) is a two-way check valve, the two-way check valve having a first inlet (221) connected to the control port (15), a second inlet (222) connected to the air intake valve chamber (24a) and an outlet (223) connected to the control chamber (10a); and
a movable valve core (226) is arranged inside a valve chamber of the two-way check valve, and as the valve core (226) moves, the first inlet (221) is in communication with the outlet (223) to open the first valve chamber, or the second inlet (222) is in communication with the outlet (223) to open the second valve chamber (22b).

4. The trailer control valve according to claim 2, **characterized in that** the second valve member (24) is a two-position three-way solenoid valve having the air intake valve chamber (24a) and an exhaust valve chamber (24b), the air intake valve chamber (24a) being connected to the air inlet (11) and the second valve chamber (22b), and the exhaust valve chamber (24b) being connected to the second valve chamber (22b).

5. The trailer control valve according to any one of claims 1-4, **characterized in that** an operating state switching control end (200) of the traction control valve (20) is connected to an electronic control unit (ECU).

6. The trailer control valve according to any one of claims 1-4, **characterized in that** the traction control valve (20) is integrated into a housing (100) of the trailer control valve.

7. The trailer control valve according to any one of claims 1-4, **characterized in that** the control port (15) comprises at least one of a first control port and a second control port (16) connected to a foot brake valve.

8. The trailer control valve according to claim 1, **characterized by** further comprising a second air outlet (13) connected to the air inlet (11).

9. The trailer control valve according to claim 8, **characterized by** further comprising a pneumatic valve (14) arranged in a pipeline from the air inlet (11) to the first air outlet (12) and the second air outlet (13), a control end of the pneumatic valve (14) being connected to the control chamber (10a).

10. A trailer braking system, **characterized by** being equipped with a trailer control valve according to any one of claims 1-9.

## Patentansprüche

1. Anhängersteuerventil, das einen Steueranschluss (15), ein Relaisventil (10), einen Lufteinlass (11) und einen ersten Luftauslass (12) umfasst, wobei der Steueranschluss (15) mit einer Steuerkammer (10a) des Relaisventils (10) verbunden ist und der Lufteinlass (11) sowie der erste Luftauslass (12) jeweils mit einer Bremskammer (10b) des Relaisventils (10) verbunden sind; wobei
ein Traktionsregelventil (20) in einer Rohrleitung vom Anschluss (15) zur Steuerkammer (10a) angeordnet und mit dem Lufteinlass (11) verbunden ist; **dadurch gekennzeichnet, dass**
das Traktionsregelventil (20) einen ersten Betriebszustand aufweist, in dem der Steueranschluss (15) über einen ersten Kanal (20a) des Traktionsregelventils (20) mit der Steuerkammer (10a) in Verbindung steht; und das Traktionsregelventil (20) einen zweiten Betriebszustand aufweist, in dem der Lufteinlass (11) über einen zweiten Kanal (20b) des Traktionsregelventils (20) mit der Steuerkammer (10a) in Verbindung steht.

2. Anhängersteuerventil nach Anspruch 1, **dadurch gekennzeichnet, dass** das Traktionsregelventil (20) Folgendes umfasst:
ein erstes Ventilelement (22), das in der Rohrleitung vom Steueranschluss (15) zur Steuerkammer (10a) angeordnet ist, wobei der erste Ventilsitz (22) eine erste Ventilkammer und eine zweite Ventilkammer (22b) aufweist, die abwechselnd geöffnet sind, und die erste Ventilkammer den ersten Kanal (20a) bildet; und
ein zweites Ventilelement (24), das mit dem Lufteinlass (11) und der zweiten Ventilkammer (22b) verbunden ist, wobei das zweite Ventilelement (24) eine Luftansaugventilkammer (24a) aufweist und wobei die Luftansaugventilkammer (24a) und die zweite Ventilkammer (22b) den zweiten Kanal (20b) bilden.

3. Anhängersteuerventil nach Anspruch 2, **dadurch gekennzeichnet, dass** das erste Ventilelement (22) ein Zweiwege-Rückschlagventil ist, wobei das Zweiwege-Rückschlagventil einen ersten Eingang (221), der mit dem Steueranschluss (15) verbunden ist, einen zweiten Eingang (222), der mit der Luftansaugventilkammer (24a) verbunden ist, und einen Ausgang (223), der mit der Steuerkammer (10a) verbunden ist, aufweist; und
ein beweglicher Ventilkegel (226) im Inneren einer Ventilkammer des Zweiwege-Rückschlagventils angeordnet ist, und wenn sich der Ventilkegel (226) bewegt, der erste Eingang (221) mit dem Ausgang (223) in Verbindung steht, um die erste Ventilkammer zu öffnen, oder der zweite Eingang (222) mit dem Ausgang (223) in Verbindung steht, um die zweite Ventilkammer (22b) zu öffnen.

4. Anhängersteuerventil nach Anspruch 2, **dadurch gekennzeichnet, dass** das zweite Ventilelement (24) ein 3/2-Wege-Magnetventil ist, das die Luftansaugventilkammer (24a) und eine Abgasventilkammer (24b) aufweist, wobei die Luftansaugventilkammer (24a) mit dem Lufteinlass (11) und der zweiten Ventilkammer (22b) verbunden ist und die Abgasventilkammer (24b) mit der zweiten Ventilkammer (22b) verbunden ist.

5. Anhängersteuerventil gemäß einem der Ansprüche 1-4, **dadurch gekennzeichnet, dass** ein Betriebszustands-Umschaltsteuerausgang (200) des Traktionsregelventils (20) mit einer elektronischen Steuereinheit (ECU) verbunden ist.

6. Anhängersteuerventil gemäß einem der Ansprüche 1-4, **dadurch gekennzeichnet, dass** das Traktionsregelventil (20) in ein Gehäuse (100) des Anhängersteuerventils integriert ist.

7. Anhängersteuerventil gemäß einem der Ansprüche 1-4, **dadurch gekennzeichnet, dass** der Steueranschluss (15) mindestens einen ersten Steueranschluss und einen zweiten Steueranschluss (16) umfasst, die mit einem Fußbremsventil verbunden sind.

8. Anhängersteuerventil nach Anspruch 1, **dadurch gekennzeichnet, dass** ferner ein zweiter Luftauslass (13) vorgesehen ist, der mit dem Lufteinlass (11) verbunden ist.

9. Anhängersteuerventil nach Anspruch 8, **dadurch gekennzeichnet, dass** ferner ein pneumatisches Ventil (14) vorgesehen ist, das in einer Rohrleitung vom Lufteinlass (11) zum ersten Luftauslass (12) und zum zweiten Luftauslass (13) angeordnet ist, und ein Steueranschluss des pneumatischen Ventils (14) mit der Steuerkammer (10a) verbunden ist.

10. Anhängerbremsanlage, **dadurch gekennzeichnet, dass** diese mit einem Anhängersteuerventil nach einem der Ansprüche 1-9 ausgestattet ist.

## Revendications

1. Vanne de commande de remorque, comprenant un orifice de commande (15), une vanne relais (10), une entrée d'air (11) et une première sortie d'air (12), l'orifice de commande (15) étant raccordé à une chambre de commande (10a) de la vanne relais (10), et l'entrée d'air (11) et la première sortie d'air (12) étant respectivement raccordées à une chambre de freinage (10b) de la vanne relais (10) ;
une vanne de commande de traction (20) étant disposée dans un conduit allant de l'orifice de commande (15) à la chambre de commande (10a) et étant raccordée à l'entrée d'air (11) ;
**caractérisée en ce que**
la vanne de commande de traction (20) a un premier état de fonctionnement dans lequel l'orifice de commande (15) communique avec la chambre de commande (10a) à travers une première voie (20a) de la vanne de commande de traction (20) ; et
la vanne de commande de traction (20) a un second état de fonctionnement dans lequel l'entrée d'air (11) communique avec la chambre de commande (10a) à travers une seconde voie (20b) de la vanne de commande de traction (20).

2. Vanne de commande de remorque selon la revendication 1, **caractérisée en ce que** la vanne de commande de traction (20) comprend :
un premier composant de vanne (22) disposé dans le conduit allant de l'orifice de commande (15) à la chambre de commande (10a), le premier composant de vanne (22) comportant une première chambre de vanne et une seconde chambre de vanne (22b) ouvertes en alternance, et la première chambre de vanne formant la première voie (20a) ; et
un second composant de vanne (24) raccordé à l'entrée d'air (11) et à la seconde chambre de vanne (22b), le second composant de vanne (24) comportant une chambre de vanne d'admission d'air (24a), et la chambre de vanne d'admission d'air (24a) et la seconde chambre de vanne (22b) formant la seconde voie (20b).

3. Vanne de commande de remorque selon la revendication 2, **caractérisée en ce que** le premier composant de vanne (22) est un clapet double, le clapet double comportant une première entrée (221) raccordée à l'orifice de commande (15), une seconde entrée (222) raccordée à la chambre de vanne d'admission d'air (24a) et une sortie (223) raccordée à la chambre de commande (10a) ; et
un obturateur mobile (226) est disposé à l'intérieur d'une chambre de clapet du clapet double et, selon le déplacement de l'obturateur (226), la première entrée (221) communique avec la sortie (223) pour ouvrir la première chambre de vanne, ou la seconde entrée (222) communique avec la sortie (223) pour ouvrir la seconde chambre de vanne (22b).

4. Vanne de commande de remorque selon la revendication 2, **caractérisée en ce que** le second composant de vanne (24) est une électrovanne à trois voies et deux positions comportant la chambre de vanne d'admission d'air (24a) et une chambre de vanne de rejet (24b), la chambre de vanne d'admission d'air (24a) étant raccordée à l'entrée d'air (11) et à la seconde chambre de vanne (22b), et la chambre de vanne de rejet (24b) étant raccordée à la seconde chambre de vanne (22b).

5. Vanne de commande de remorque selon l'une quelconque des revendications 1 à 4, **caractérisée en ce qu'**un côté commande de commutation d'état de fonctionnement (200) de la vanne de commande de traction (20) est raccordé à un bloc de commande électronique (ECU).

6. Vanne de commande de remorque selon l'une quelconque des revendications 1 à 4, **caractérisée en ce que** la vanne de commande de traction (20) est intégrée dans un corps (100) de la vanne de commande de remorque.

7. Vanne de commande de remorque selon l'une quelconque des revendications 1 à 4, **caractérisée en ce que** l'orifice de commande (15) comprend un premier orifice de commande et/ou un second orifice de commande (16) raccordé à une vanne de frein à pied.

8. Vanne de commande de remorque selon la revendication 1, **caractérisée en ce qu'**elle comprend, en outre, une seconde sortie d'air (13) raccordée à l'entrée d'air (11).

9. Vanne de commande de remorque selon la revendication 8, **caractérisée en ce qu'**elle comprend, en outre, une vanne pneumatique (14) disposée dans un conduit allant de l'entrée d'air (11) à la première sortie d'air (12) et à la seconde sortie d'air (13), un côté commande de la vanne pneumatique (14) étant raccordé à la chambre de commande (10a).

10. Système de freinage de remorque, **caractérisé en ce qu'**il est pourvu d'une vanne de commande de remorque selon l'une quelconque des revendications 1 à 9.
